# EUROPÄISCHE PATENTANMELDUNG

(11) **EP 0 945 729 A1**
(43) Veröffentlichungstag der Anmeldung: **29.09.1999**
(21) Anmeldenummer: 99104268.0
(22) Anmeldetag: 03.03.1999
(51) Int. Cl.: G01P 3/44, G01P 1/04, F16H 55/12

(54) **Geberrad zur Detektierung des Drehwinkels und/oder der Umlaufgeschwindigkeit von umlaufenden Wellen und Verfahren zur Herstellung desselben**

(30) Priorität: 27.03.1998 DE 19813594
(71) Anmelder: Volkswagen Aktiengesellschaft, 38436 Wolfsburg (DE)
(72) Erfinder: Passekel, Edwin, 38518 Gifhorn (DE)

(57) **Zusammenfassung**

Die Erfindung betrifft ein Geberrad zur Detektierung des Drehwinkels und/oder der Umlaufgeschwindigkeit von umlaufenden Wellen und ein Verfahren zur Herstellung desselben. Das Geberrad wird durch ein im Querschnitt topfförmiges Nabenteil (1) und einen auf dessen Außendurchmesser über seine Aufnahmebohrung geführten und befestigten Zahnring (3) gebildet.

Aufgabe der Erfindung ist es, ein aus zwei Teilen gebildetes Geberrad und ein Verfahren zu seiner Herstellung so zu gestalten, daß eine einfache Herstellung und genaue Montage der Teile des Geberrades erzielt wird.

Erfindungsgemäß wird dies dadurch erreicht, daß die Aufnahmebohrung (2) des Zahnringes 3 eine axiale ringförmige Grundfläche (4) aufweist, an welcher das Nabenteil (1) mit seiner ringförmigen Stirnfläche (5) im gefügten Zustand anliegt.

Erfindungsgemäß werden in einer Fügevorrichtung der Zahnring (3) über eine Zahnlücke (10) und das Nabenteil (1) über eine Positionsbohrung , z. B. einem der Befestigungslöcher (8 oder 9), zueinander geführt und das Nabenteil (1) mit seiner ringförmigen Stirnfläche (5) in die Aufnahmebohrung (2) des Zahnringes (3) eingefügt bis die ringförmige Stirnfläche (5) an der axialen Grundfläche (4) des Zahnringes (3) anliegt.

## Beschreibung

Die Erfindung betrifft ein Geberrad zur Detektierung des Drehwinkels und/oder der Umlaufgeschwindigkeit von umlaufenden Wellen und ein Verfahren zur Herstellung desselben mit den im Oberbegriff der Patentansprüche genannten Merkmalen.

Vorbekannt ist durch die Schritt DE 39 27 171 A1 ein aus zwei Teilen gebildeter Impulsgeberring. Ein Innenring weist an seinem einen Ende in gleichförmigen Winkelabständen angeordnete, radial gerichtete Vorsprünge auf. Ein Außenring hat zylinderförmig angeordnete, axial gerichtete Stege. Diese Stege greifen im gefügten Zustand von Innen- und Außenring nahe ihres freien Endes zwischen den benachbarten radialen Vorspüngen des Innenringes ein. Die zwischen den radialen Vorsprüngen axial überstehenden Enden der Stege des Außenringes werden nach innen umgebogen, bis sie an der Stirnfläche des Innenringes anliegen. Hiermit sind Innen- und Außenring fest miteinander verbunden. Nachteilig ist die technologisch aufwendige Herstellung dieses Impulsgeberringes.

Vorbekannt ist ein einteiliges Geberrad für einen Sensor zum Erfassen der Drehzahl einer Kurbelwelle von Brennkraftmaschinen mit einem topfförmigen Nabenteil mit aufgerollten Zähnen. Ein solches Geberrad wird von der Anmelderin serienmäßig in ihren VR6-Motoren verbaut. Ein weiteres Geberrad der Anmelderin (VR5-Motor) wird einstückig spanend inklusive der Verzahnung hergestellt.

Es ist die Aufgabe der Erfindung, ein gattungsgemäßes, aus zwei Teilen gebildetes Geberrad und ein Verfahren zur Herstellung so zu gestalten, daß eine einfache, kostengünstigere und genaue Herstellung und Montage der Teile des Geberrades möglich ist.

Die erfindungsgemäße Lösung der Aufgabe erfolgt durch die im kennzeichnenden Teil des Haupt- und Nebenanspruches genannten Merkmale der Gestaltung und Herstellung.

Es ist eine einfache und genaue Herstellung des Zahnringes sowie des Nabenteiles möglich sowie das Fügen beider Teile in korrekter Lage zueinander gewährleistet. Anhand einer Zeichnung werden nachfolgend Ausführungsbeispiele und vorteilhafte Gestaltungen gemäß der Erfindung erläutert.

### Es zeigt:

- Figur 1: eine Gesamtansicht des Geberrades,
- Figur 2: einen Schnitt entlang der Linie A - A gemäß Figur 1,
- Figur 3: eine im Maßstab vergrößerte Teilansicht von Figur 2

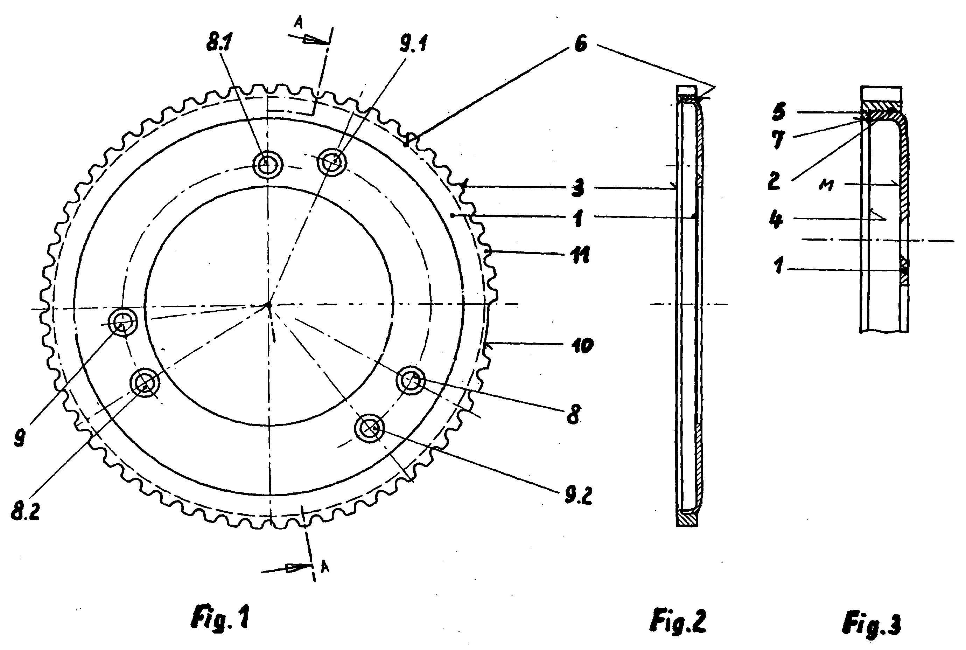

Das Geberrad besteht aus einem im Querschnitt topfförmigen, in seiner Grundform vorzugsweise spanlos hergestellten Nabenteil 1 und einem auf dessen Außendurchmesser über eine Aufnahmebohrung 2 geführten und befestigten Zahnring 3. Die Aufnahmebohrung 2 des Zahnringes 3 weist eine axial ringförmige Grundfläche 4 auf. Der Zahnring 3 wird spanend hergestellt, so daß die Aufnahmebohrung 2, deren axiale Grundfläche 4 und seine Verzahnung geometriegerecht zueinander laufen. An der Grundfläche 4 des Zahnringes 3 liegt das Nabenteil 1 im gefügten Zustand mit einer zu seiner axialen Montagefläche M beabstandet laufenden ringförmigen Stirnfläche 5 an. Zum Fügen werden Zahnring 3 und Nabenteil 6 in eine Vorrichtung eingelegt, wobei der Zahnring 3 in einer Zahnlücke 10 und das Nabenteil 1 in einer Positionsbohrung, z. B. eine der Befestigungslöcher 8 oder 9, zueinander winkelgerecht geführt werden. Das Nabenteil 1 wird in die Aufnahmebohrung 2 des Zahnringes 3 eingebracht, bis seine ringförmige Stirnfläche 5 an der axialen Grundfläche 4 des Zahnringes 3 anliegt. Durch die Anlage der vorgenannten axialen Flächen 4; 5, die mit den radialen Flächen zusammen bearbeitet werden, wird die korrekte Lage von Nabenteil 1 und Zahnring 3 zum Vermeiden von Rundlauf- und Planschlagfehlem vor dem Verschweißen hergestellt. Im gefügten Zustand werden Zahnring 3 und Nabenteil 1 im Bereich ihrer angrenzenden Flächen am Außendurchmesser 2 des Nabenteiles 1 - siehe Fig. 1 und 2 oder an der axialen ringförmigen Grundfläche 4 am Zahnring 3 und der ringförmigen Stirnfläche 5 des Nabenringes 1 innen vertaufend - Fig. 3 - verschweißt, siehe die entsprechenden Schweißnähte 6 und 7. Vorzugsweise wird Laser- oder Elektronenstrahlschweißen angewandt. Zum Fügen können Zahnring 3 und Nabenteil 1 auch unterschiedliche Temperaturen aufweisen, so daß sich der Zahnring 3 weitet und das Nabenteil sich verkleinert bzw. zusammenzieht. Beide Teile sind danach durch einen Schrumpfsitz im Bereich der Fügeflächen verbunden. Das Geberrad ist im Einbauzustand drehfest an einer Kurbelwelle befestigt und wirkt mittels der auf dem Umfang des Zahnringes 3 vorhandenen Zähne 11 mit einem am Kurbelgehäuse angebrachten Sensor zusammen, - nicht dargestellt.

Für die Anwendung des Geberrades bei verschiedenen Motorentypen mit unterschiedlichen Zylinderzahlen kann der Zahnring 3 je nach Erfordernis zum Nabenteil 1 unterschiedlich jedoch unverwechselbar positioniert werden. Das Nabenteil 1 des Geberrades erhält beispielsweise hierfür zwei Gruppen von Befestigungslöchern 8, 8.1, 8.2 bzw. 9, 9.1, 9.2.

## Patentansprüche

1. Geberrad zur Detektierung des Drehwinkels und/oder der Umlaufgeschwindigkeit von umlaufenden Wellen, das durch ein im Querschnitt topfförmiges Nabenteil und einen auf dessen Außendurchmesser über seine Aufnahmebohrung geführten und befestigten Zahnring gebildet ist,
dadurch gekennzeichnet,
daß die Aufnahmebohrung (2) des Zahnringes (3) eine axiale ringförmige Grundfläche (4) aufweist, an welcher das Nabenteil (1) mit seiner ringförmigen Stirnfläche (5) im gefügten Zustand anliegt.

2. Geberrad nach Anspruch 1,
dadurch gekennzeichnet,
daß Zahnring (3) und Nabenteil (1) im Bereich ihrer axialen Grenzflächen am Außendurchmesser des Nabenteiles (1) umlaufend verschweißt sind.

3. Geberrad nach Anspruch 1,
dadurch gekennzeichnet,
daß Zahnring (3) und Nabenteil (1) im Bereich ihrer Grenzflächen an der axialen ringförmigen Grundfläche (4) am Zahnring (3) und der ringförmigen Stirnfläche (5) des Nabenteiles (1) innen umlaufend verschweißt sind.

4. Verfahren zur Herstellung eines zweiteilig gefügten Geberrades nach Anspruch 1, mit jeweils einzeln gefertigtem Zahnring (3) und Nabenteil (1), wobei beide Teile, (1, 3) in einer Fügeeinrichtung zueinander geführt, gefügt werden,
dadurch gekennzeichnet,
daß in der Fügevorrichtung der Zahnring (3) über eine Zahnaussparung (10) und das Nabenteil (1) über eine Positionsbohrung bzw. ein Befestigungsloch (8 oder 9) geführt werden und das Nabenteil (1) mit seiner ringförmigen Stirnfläche (5) in die Aufnahmebohrung (2) des Zahnringes (3) eingefügt wird, bis die ringförmige Stirnfläche (5) an der axialen Grundfläche (4) anliegt.

5. Verfahren zur Herstellung eines Geberrades nach Anspruch 4,
dadurch gekennzeichnet,
daß beim Fügen des Zahnringes (3) und des Nabenteiles (1), diese Teile (3; 1) unterschiedliche Temperaturen aufweisen und anschließend im Bereich der Fügeflächen einen Schrumpfsitz bilden.

6. Verfahren zur Herstellung eines Geberrades nach Anspruch 4,
dadurch gekennzeichnet,
daß Zahnring (3) und Nabenteil (1) spielfrei gleitend gefügt und vorzugsweise durch Laser- oder Elektronenstrahlschweißen verbunden werden.
